# FASCICULE DE BREVET EUROPEEN

(11) **EP 4 590 544 B1**
(45) Date de publication et mention de la délivrance du brevet: **09.12.2026**
(21) Numéro de dépôt: 22790294.7
(22) Date de dépôt: 19.09.2022
(51) Int. Cl.: B60M 1/24, B60M 1/20

(54) **DEMI-PIECE POUR UN DISPOSITIF D'ATTACHE D'UN TUBE**
HALBSTÜCK FÜR EINE VORRICHTUNG ZUR BEFESTIGUNG EINES ROHRS
HALF-PIECE FOR A DEVICE FOR ATTACHING A TUBE

(43) Date de publication de la demande: 30.07.2025
(73) Titulaire: Galland, 33240 La Lande de Fronsac (FR)
(72) Inventeur: KHOUYA, Christophe, 33240 LA LANDE DE FRONSAC (FR); DELAGE, Michael, 33240 LA LANDE DE FRONSAC (FR)
(74) Mandataire: Aquinov
(86) Numéro de dépôt international: PCT/EP2022/075988
(87) Numéro de publication internationale: WO 2024/061440

(56) Documents cités:
- CN-A- 106 956 617
- CN-U- 206 287 855
- CN-U- 215 513 325
- DE-U1- 9 213 837

## Description

La présente invention concerne le domaine technique des dispositifs d'attache notamment d'un tube de structure pour armement d'une caténaire.

Dans le domaine ci-dessus, il est connu des armements pour soutenir une caténaire qui est un ensemble de câbles porteurs et de fils conducteurs destinés à l'alimentation des moyens de transports électriques à captage du courant par dispositif aérien.

Le captage du courant aux vitesses élevées nécessite un fil de contact qui doit suivre une certaine régularité. Des irrégularités se traduiraient par des discontinuités dans le captage de l'énergie électrique entraînant une dégradation prononcée du matériel (bande d'usure et fil de contact).

Or, du fait de son poids, un fil tendu entre deux points ne peut pas suivre une ligne droite. Il suit une courbe qu'on appelle la flèche. Le fil de contact présente ainsi une flèche spécifique entre deux points de suspension consécutifs (portée).

Pour soutenir la caténaire, des poteaux espacés sont équipés d'armements constitués de tubes de structure. La plupart des armements comprennent deux types de tubes qui comprennent chacun un diamètre différent. Il est alors nécessaire de mettre en œuvre deux types de dispositif d'attache différents.

Tels dispositifs d'attache sont décrits dans CN106956617A, CN215513325U et CN206287855U.

L'invention vise à proposer un dispositif polyvalent qui peut s'adapter à deux tailles de diamètre de tube de structure.

A ces fins l'invention propose une demi-pièce pour un dispositif d'attache d'un tube de structure d'armement comprenant une partie centrale de forme allongée selon la direction X perpendiculairement à la direction longitudinale Y du tube et comprenant au moins en partie des moyens de maintien du tube, et deux parties extérieures s'étendant selon la direction X de part et d'autre de la partie centrale, une première partie extérieure comprenant une première extension s'étendant selon la direction Z depuis le bord adjacent à la partie centrale perpendiculaire au plan X,Y comportant deux butées définissant deux hauteurs, une première butée comprenant une première longueur de butée et une première hauteur de butée et une deuxième butée comprenant une deuxième hauteur de butée, la première hauteur de butée étant supérieure à la deuxième hauteur de butée, une deuxième partie extérieure comprenant une deuxième extension selon la direction Z perpendiculaire au plan X,Y comportant deux butées définissant deux hauteurs, une première butée comprenant une première hauteur de butée et une deuxième butée comprenant une deuxième hauteur de butée et une deuxième longueur de butée, la première hauteur de butée étant supérieure à la deuxième hauteur de butée, la deuxième extension est éloignée du bord adjacent à la partie centrale d'une distance sensiblement égale à la longueur de la première butée de la première extension.

Ainsi la demi-pièce présente une asymétrie qui permet d'associer deux demi-pièces avec des configurations différentes. La mise en œuvre de deux butées de hauteurs différentes permet d'associer deux demi-pièces autour de deux tubes comprenant des diamètres différents. Pour ce faire, les butées destinées à être mises en contact présentent une surface plane qui permet de garder sensiblement parallèles les deux demi-pièces en vis-à-vis.

Selon une caractéristique de l'invention, la différence de hauteur de butée sur la première extension, est inférieure à la hauteur de butée de la deuxième butée de la deuxième extension.

Avantageusement, la différence des deux hauteurs correspond à la moitié de la valeur de la différence de deux diamètres de tube.

Selon une autre caractéristique de l'invention, au moins une partie extérieure comprend un prolongement selon l'axe X comportant une ouverture. La mise en œuvre d'au moins un prolongement comprenant une ouverture permet de fixer au moins une demi-pièce à un support ou à un dispositif.

Selon une caractéristique de l'invention, les moyens de maintien du tube comprennent une forme arrondie ou forme « en V ». La forme arrondie ou « en V » épouse au moins en partie les contours d'un tube et permet de le maintenir efficacement. Le tube à attacher est ainsi maintenu au moins en partie dans la pièce centrale d'une demi-pièce.

Selon encore une autre caractéristique de l'invention, les moyens de maintien du tube comprennent des rainures dans le sens longitudinal Y du tube. La mise en œuvre de rainure permet de serrer le tube pour éviter un glissement du tube contre la demi-pièce.

Selon une caractéristique de l'invention, la première hauteur de butée de la première extension est supérieure à la première hauteur de butée de la deuxième extension. Une telle asymétrie permet de pouvoir identifier plus facilement un sens de mise en œuvre de deux demi-pièces en vis-à-vis. De plus, pour former un système d'attache tel que décrit plus bas, cette différence permet d'optimiser la dimension du système d'attache tout en en compensant les tolérances induites par la fabrication.

Selon une forme de réalisation de l'invention, la première butée de la deuxième extension comprend un marqueur de position. Un marqueur de position tel qu'une rainure mise en œuvre au niveau d'une butée est un autre moyen d'identifier facilement le sens d'une demi-pièce pour pouvoir les positionner facilement.

Selon une forme de réalisation de l'invention, la partie centrale comprend un allongement dans le sens Z. La mise en œuvre d'un allongement permet de pouvoir y placer des moyens d'accroche à un support par exemple.

Selon une caractéristique de l'invention, la demi-pièce est obtenue par un procédé d'extrusion. Ainsi une telle demi-pièce est produite sous la forme d'un bloc par exemple en aluminium et permet ainsi d'obtenir une très bonne tenue mécanique. D'autres procédés de fabrication sont compatibles dans le cadre de l'invention, tels qu'un procédé de moulage, de forgeage ou encore d'impression 3D.

L'invention concerne également un dispositif d'attache d'un tube comprenant deux demi-pièces selon l'invention et des moyens d'attache des deux demi-pièces entre elles. Avantageusement deux demi-pièces de structures sensiblement identiques selon l'invention peuvent être assemblées pour former un dispositif d'attache d'un tube.

Selon une forme de réalisation du dispositif d'attache selon l'invention, une demi-pièce est dans le plan X,Y,Z et l'autre demi-pièce a subi une rotation selon l'axe X. Selon cette forme de configuration un tube d'un certain diamètre peut être pris en étau entre deux demi-pièces.

Selon une autre forme de réalisation du dispositif d'attache selon l'invention, une demi-pièce est dans le plan X,Y,Z et l'autre demi-pièce a subi une rotation selon l'axe Y. Selon cette forme de configuration un tube d'un autre diamètre peut être pris en étau entre deux demi-pièces.

L'invention concerne également un système d'attache comprenant deux dispositifs d'attache selon l'invention et des moyens de manœuvre par pivot des deux dispositifs d'attache entre eux. La liaison pivot entre deux dispositifs permet de garder une souplesse pour le système d'attache de deux tubes et ainsi de permettre à l'armement de pouvoir compenser des efforts extérieurs.

Selon une optimisation de la mise en œuvre du système d'attache, celui-ci est placé au plus près des deux tuyaux à attacher réduisant ainsi le couple d'effort extérieur.

Selon une caractéristique de l'invention les moyens de manœuvre par pivot comprennent un axe traversant les quatre demi-pièces.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue à plat d'un armement comprenant plusieurs exemples de dispositifs selon l'invention,
[Fig.2] est une vue en perspective d'un dispositif selon l'invention,
[Fig.3] est une vue en perspective d'un exemple de pièce pour former en partie un dispositif selon l'invention,
[Fig.4] est une vue en coupe de la pièce de la figure 3,
[Fig.5] est une vue à plat de la pièce de la figure 3,
[Fig.6] est une vue en perspective d'un autre exemple de pièce pour former un dispositif selon l'invention,
[Fig.7] est une vue en perspective d'une forme de réalisation d'un dispositif selon l'invention,
[Fig.8] est une vue à plat du dispositif de la figure 7,
[Fig.9] est une vue en perspective d'une autre forme de réalisation d'un dispositif selon l'invention,
[Fig.10] est une vue à plat du dispositif de la figure 9,
[Fig.11] est une vue en perspective d'une autre forme de réalisation d'un dispositif selon l'invention,
[Fig.12] est une vue à plat du dispositif de la figure 11,
[Fig.13] est une vue en perspective d'une autre forme de réalisation d'un dispositif selon l'invention,
[Fig.14] est une vue à plat du dispositif de la figure 13,
[Fig.15] est une vue à plat d'un autre équipement comprenant plusieurs exemples de dispositifs selon l'invention, et
[Fig.16] est une vue à plat d'un autre équipement comprenant plusieurs exemples de dispositifs selon l'invention.

Il est à noter que sur ces figures les éléments structurels et/ou fonctionnels communs aux différentes variantes peuvent présenter les mêmes références.

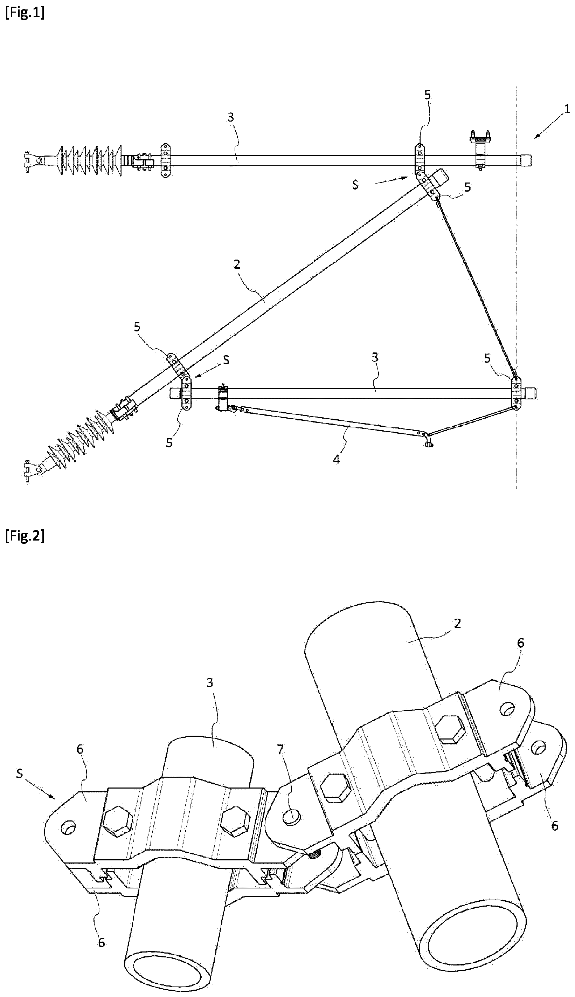

L'invention vise à assurer l'assemblage d'un armement 1 tel qu'il est illustré à la figure 1 pour une caténaire (non représentée). Un armement 1 au sens de l'invention comprend au moins un tube primaire 2 comprenant un premier diamètre d1 et un tube secondaire 3 comprenant un deuxième diamètre d2 avec d1 supérieur à d2 et au moins deux tubes 2,3 étant destinés à être fixé à un poteau (non représenté).

La figure 1 illustre un exemple d'armement 1 comprenant un tube primaire 2 aussi appelé console et deux tubes secondaires 3 qui correspondent au hauban de la console et à l'antibalançant ainsi qu'un bras de rappel 4.

Afin d'attacher les tubes primaire 2 et secondaire 3 ensembles, l'invention propose notamment un système de maintien S tel qu'il est illustré à la figure 2.

Un tel système de maintien S est formé par deux dispositifs d'attache 5 comprenant chacun deux demi-pièces 6. Une première configuration C1 décrite ci- après de deux demi-pièces 6 mises en vis-à-vis après permet le maintien d'un tube primaire 2 et une deuxième configuration C2 de deux demi-pièces 6 mises en vis-à-vis permet le maintien d'un tube secondaire 3. Et les deux ensembles C1 et C2 sont liées par un système pivot, par exemple un axe 7 traversant chacune des quatre demi-pièces 6.

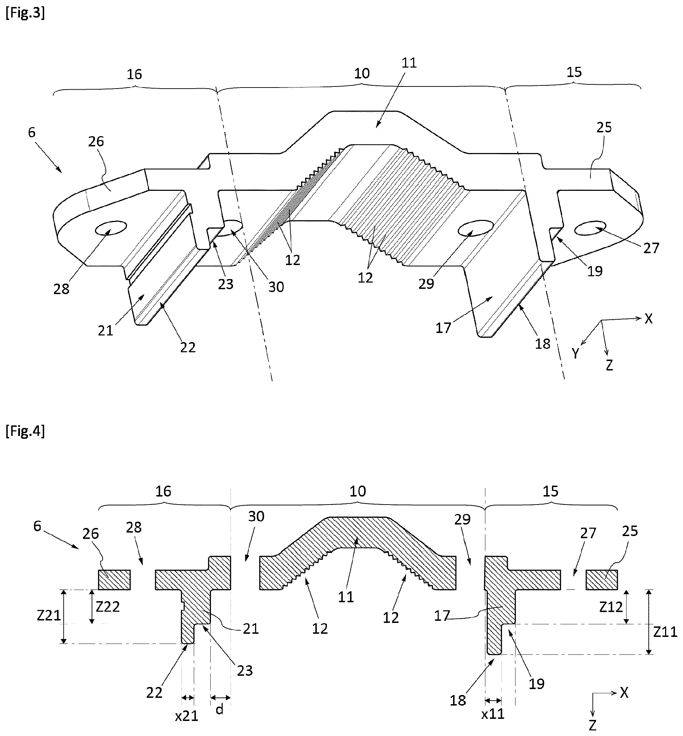

La figure 3 illustre une demi-pièce 6 selon l'invention. La demi-pièce comprend une partie centrale 10 comportant une forme en V ou forme arrondie 11 apte à épouser au moins en partie la forme d'un tube primaire 2 ou secondaire 3. Afin d'éviter le glissement du tube 2,3, l'intérieur de la forme concave de la partie centrale 10 présente des rainures 12 dans un sens parallèle au sens longitudinal du tube 2,3 correspondant. D'autres moyens de maintien d'un tube 2,3 sont compatibles avec l'invention.

La demi-pièce 6 comporte également une première partie extérieure 15 et une deuxième partie extérieure 16 de part et d'autre de la partie centrale 10. Les deux parties extérieure 15,16 s'étendent selon l'axe X perpendiculaire à l'axe Y correspondant à l'axe longitudinal du tube 2,3 destiné à être enserré.

La première partie extérieure 15 comprend une extension 17 s'étendant selon la direction Z depuis le bord adjacent à la partie centrale 10 perpendiculaire au plan X,Y. La première extension 17 comporte deux butées 18,19 définissant deux hauteurs z11,z12. La première butée 18 comprend une première longueur de butée x11 et une première hauteur de butée z11 et la deuxième butée 19 comprend une deuxième hauteur de butée z12. La première hauteur de butée z11 est supérieure à la deuxième hauteur de butée z12.

Selon l'invention, les butées 18,19 ont sensiblement la forme d'un pavé droit ou parallélépipède rectangle. La face libre de chaque butée 18,19, à l'opposé des parties extérieures 15,16 est plane et sensiblement parallèle au plan X,Y.

La deuxième partie extérieure 16 comprend également une extension 21 selon la direction Z perpendiculaire au plan X,Y. La deuxième extension 21 comporte deux butées 22,23 définissant deux hauteurs de valeur absolue z21,z22. La première butée 22 comprend une première hauteur de butée z21 et une deuxième butée 23 comprend une deuxième hauteur de butée z22 et une deuxième longueur de butée x22, la première hauteur de butée z21 étant supérieure à la deuxième hauteur de butée z22.

La deuxième extension 21 est éloignée du bord adjacent à la partie centrale 10 d'une distance d sensiblement égale à la première longueur de butée x11 de la première butée 18 de la première extension 17.

La différence de hauteur de butée sur la première extension 17, soit la valeur z11-z12, est inférieure à la hauteur de butée z22 de la deuxième butée 23 de la deuxième extension 21.

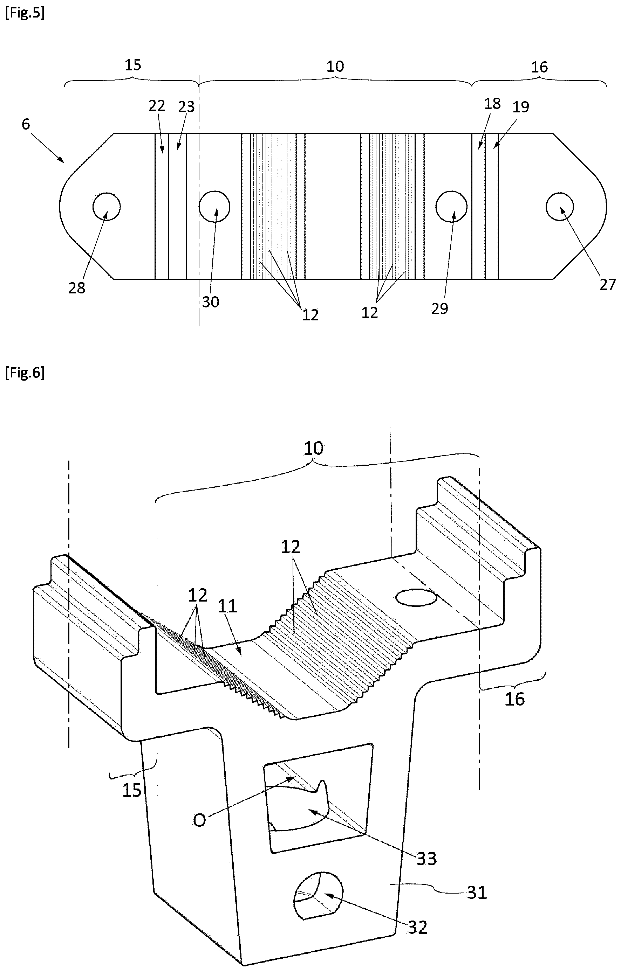

Les deux parties extérieures 15,16 comprennent également deux prolongements 25,26 à l'opposé de la partie centrale 10 destinées à relier le dispositif d'attache 5 à un autre dispositif d'attache 5 pour former un système d'attache S ou à relier le dispositif d'attache 5 à un support tel qu'un renfort ou une suspension. Les prolongements 25,26 comprennent des ouvertures 27,28 aptes à la mise en œuvre d'un système axe 7 épaulé muni d'une goupille destiné à former une liaison pivot décrite plus bas. Selon une forme de réalisation notamment illustrée à la figure 6, la demi-pièce 6 ne comprend pas de prolongements. Selon des formes d'association et de configuration de demi-pièces 6 entre elles, seule une demi-pièce 6 peut comprendre un ou deux prolongements.

La demi-pièce 6 visible aux figure 3, 4 et 5 comprend également pour la partie centrale 10 des ouvertures centrales 29,30 de part et d'autre de la place du tube 2,3 à maintenir aptes au passage d'un système vis/écrou destiné au maintien de demi-pièces 6 entre elles.

La forme de réalisation de la demi-pièce 6 visible à la figure 6 ne comprend pas de prolongement tel que décrit plus haut. La partie centrale 10 de la demi-pièce 6 comprend un allongement 31 selon l'axe Z destiné à fixer un élément au dispositif d'attache 5 tel qu'une pince porteur. A ces fins l'allongement 31 comprend une ouverture traversante 32 ainsi qu'une ouverture débouchante 33 et une ouverture O pour accéder à l'ouverture débouchante 33. L'élément à ajouter peut ainsi être fixé à la demi-pièce 6 au moyen d'un système vis/écrou.

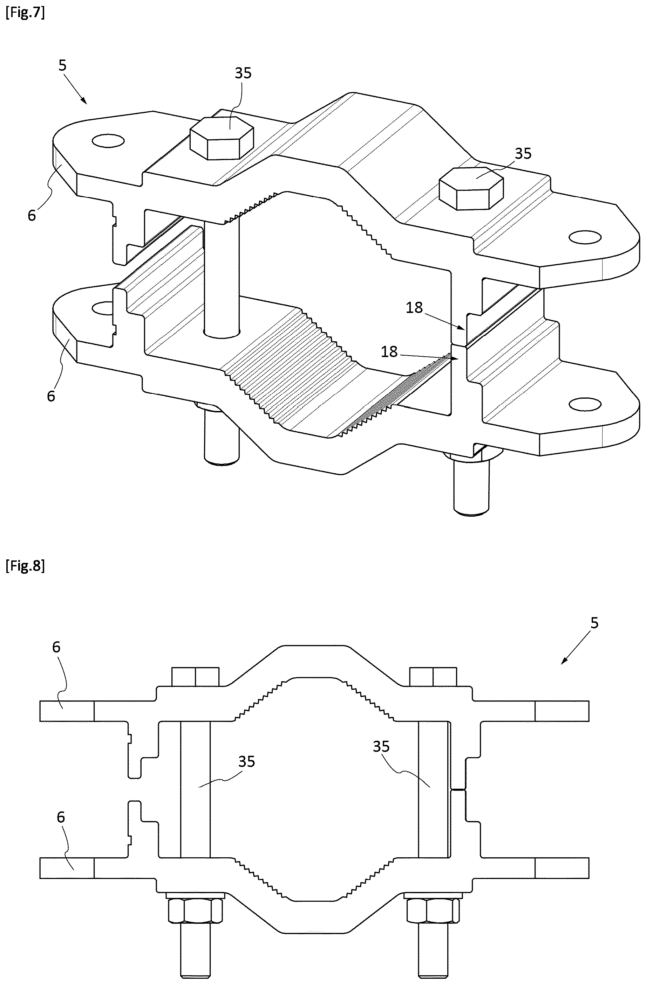

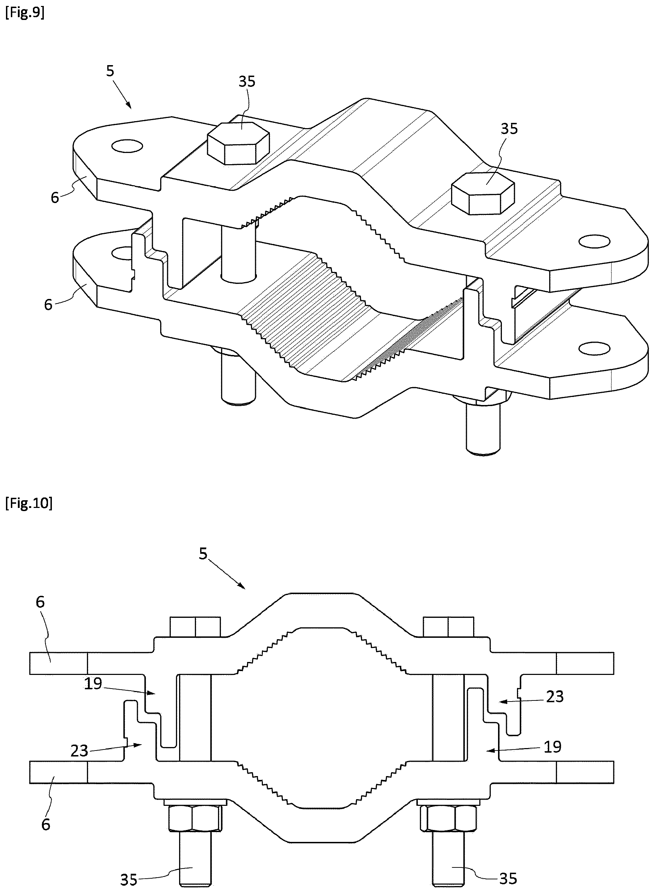

Deux configurations sont possibles pour assembler de deux demi-pièces 6 selon l'invention pour former un dispositif d'attache. Une première configuration C1 visible aux figures 7 et 8 est destinée à attacher un tube primaire 2. Une deuxième configuration C2 visible aux figures 9 et 10 est destinée à attacher un tube secondaire 3.

Pour former un dispositif d'attache 5 tel qu'illustré aux figures 7 et 8, deux demi-pièces 6 sont mises en vis-à-vis et une des demi-pièce 6 subit une rotation par rapport à l'axe X tel que défini plus haut. Ainsi les deux premières butées 18 de la première extension 17 se retrouvent en vis-à-vis autour du tube primaire 2 à attacher.

Pour assurer le maintien du tube primaire 2, un opérateur place au moins une vis 35 dans l'ouverture centrale 29 (du côté de la deuxième butée 23 de la deuxième extension 17) de la partie centrale 10 de chaque demi-pièce 6 en vis-à-vis, place un boulon en sortie et sert l'ensemble selon un couple de force préalablement déterminé. Selon la forme de réalisation illustrée aux figures 7 et 8, deux systèmes vis 35/boulon sont destinés à fixer les demi-pièces 6 ensembles.

Pour former un dispositif d'attache 5 tel qu'illustré aux figures 9 et 10, deux demi-pièces 6 sont mises en vis-à-vis et une des demi-pièce 6 subit une rotation par rapport à l'axe Y tel que défini plus haut. Ainsi chaque deuxième butée 19 de chaque première extension 17 des deux demi-pièces 6 se retrouve en vis-à-vis de la deuxième butée 23 de la deuxième extension 18 correspondante autour du tube secondaire 3 à attacher.

Pour assurer le maintien du tube secondaire 3, un opérateur place au moins une vis 35 dans une ouverture centrale 29,30 de la partie centrale 10 de chaque demi-pièce 6 en vis-à-vis, place un boulon en sortie et sert l'ensemble selon un couple de force préalablement déterminé. Selon la forme de réalisation illustrée aux figures 9 et 10, deux systèmes vis 35/boulon sont destinés à fixer les demi-pièces 6 ensembles.

Pour faciliter la mise en œuvre des deux demi-pièces 6 à mettre en vis-à-vis selon la configuration voulue, la demi-pièce 6 comprend un marqueur de position tel qu'une rainure usinée sur l'une des butées. Selon l'exemple illustrée une rainure apparait sur le côté de la première butée 22 de la deuxième extension 21. Les deux premières butées 18,22 des deux extensions 17,21 sont de hauteurs différentes. Cela permet de faciliter la mise en œuvre des deux configurations possibles. Selon d'autres formes de réalisation les deux premières butées 18,22 des deux extensions 17,21 sont de même hauteur.

Un système d'attache S comprend deux dispositifs d'attache 5 tels que décrits ci-dessus afin d'attacher un tube primaire 2 à un tube secondaire 3. Un axe 7 relie par exemple les deux dispositifs d'attache 5 afin de les relier par un système pivot. Un tel axe 7 comporte un épaulement d'un côté et une goupille en sortie afin de sécuriser la liaison pivot. D'autres moyens de manœuvre par pivot sont compatibles dans le cadre de l'invention.

Selon la forme de réalisation illustrée, la première butée 22 de la deuxième extension 21 est plus petite que la première butée 18 de la première extension 17. Selon la configuration pour attacher un tube primaire 2 illustrée aux figures 7 et 8, cette différence permet notamment de rattraper des tolérances de fabrication des demi-pièces 6. Dans une telle configuration, les prolongements 25,26 ont une dimension optimisée, c'est -à-dire la plus petite possible, pour placer la liaison pivot au plus près de chacun des dispositifs d'attache 5 limitant ainsi les efforts induits sur le système d'attache S.

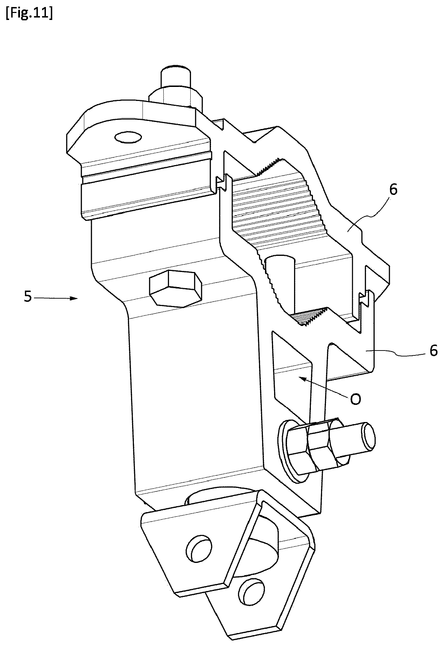

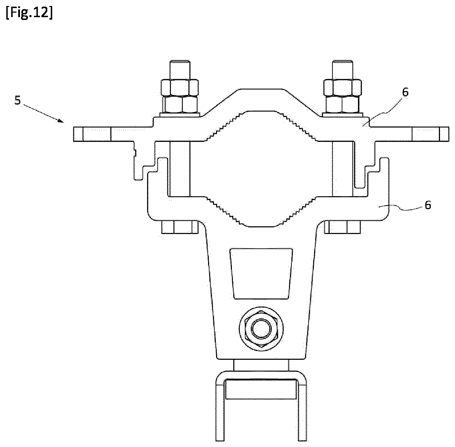

Les figures 11 et 12 illustrent une autre forme de réalisation d'un dispositif d'attache 5 pour un tube secondaire 3 selon l'invention. Une configuration pour attacher un tube primaire 2 est également possible. Selon cette forme de réalisation illustrée aux figures 11 et 12, le dispositif d'attache 5 comprend une demi-pièce 6 telle qu'elle apparait aux figures 3 à 5 et une demi-pièce 6 telle qu'elle apparait à la figure 6.

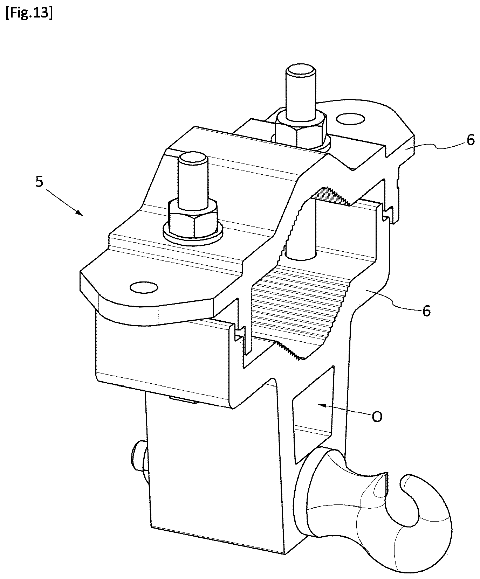

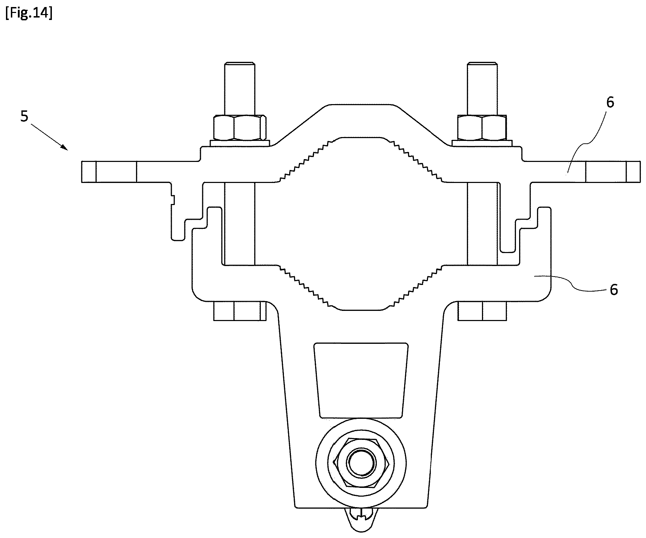

Les figures 13 et 14 illustrent une autre forme de réalisation d'un dispositif d'attache 5 pour un tube secondaire 3 selon l'invention. Une configuration pour attacher un tube primaire 2 est également possible. Selon cette forme de réalisation illustrée aux figures 11 et 12, le dispositif d'attache 5 comprend une demi-pièce 6 telle qu'elle apparait aux figures 3 à 5 et une demi-pièce 6 telle qu'elle apparait à la figure 6. Selon cette forme de réalisation la demi-pièce portant la pince ne comprend pas d'ouverture débouchante 33.

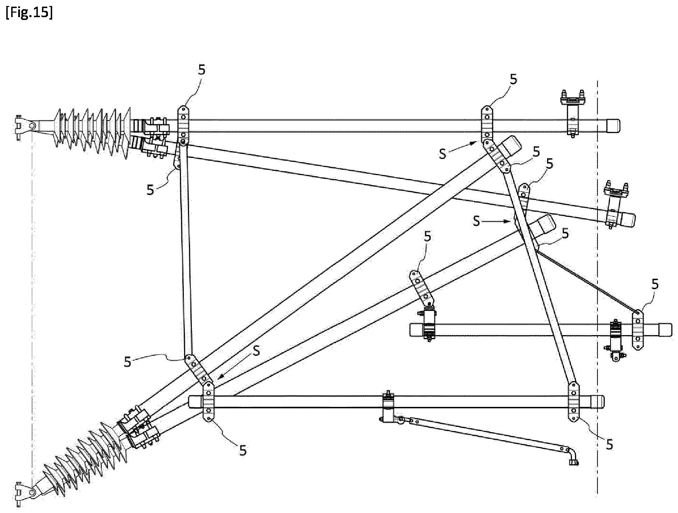

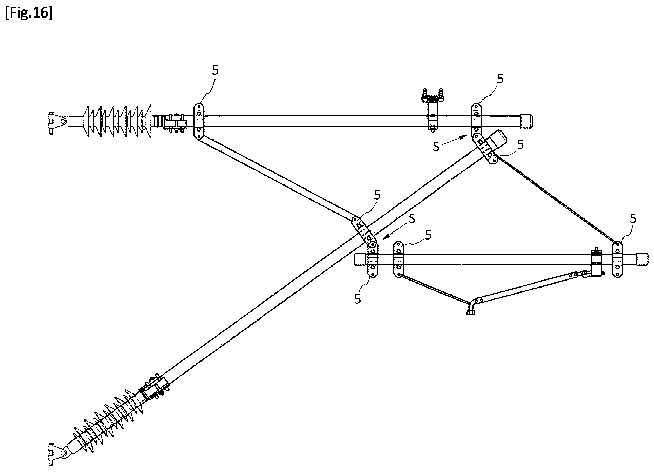

Les figures 15 et 16 illustrent d'autres exemples d'armements mettant en œuvre des dispositifs d'attache 5 selon l'invention et des systèmes d'attache S selon l'invention.

Bien entendu, diverses autres modifications peuvent être apportées à l'invention dans le cadre des revendications annexées.

## Revendications

1. Demi-Pièce (6) pour un dispositif d'attache (5) d'un tube (2,3) de structure d'armement de caténaire (1) comprenant :
- une partie centrale (10) de forme allongée selon la direction (X) perpendiculairement à la direction longitudinale (Y) du tube (2,3) et comprenant au moins en partie des moyens de maintien du tube(2,3), et
- deux parties extérieures (15,16) s'étendant selon la direction (X) de part et d'autre de la partie centrale (10), une première partie extérieure (15) comprenant une première extension (17) s'étendant selon la direction (Z) depuis le bord adjacent à la partie centrale (10) perpendiculaire au plan (X,Y) comportant deux butées (18,19) définissant deux hauteurs (z11,z12), une première butée (18) comprenant une première longueur de butée (x11) et une première hauteur de butée (z11) et une deuxième butée (19) comprenant une deuxième hauteur de butée (z12), la première hauteur de butée (z11) étant supérieure à la deuxième hauteur de butée (z12), une deuxième partie extérieure (16) comprenant une deuxième extension (21) selon la direction (Z) perpendiculaire au plan (X,Y) comportant deux butées (22,23) définissant deux hauteurs (z21,z22), une première butée (22) comprenant une première hauteur de butée (z21) et une deuxième butée (23) comprenant une deuxième hauteur de butée (z22) et une deuxième longueur de butée (x22), la première hauteur de butée (z21) étant supérieure à la deuxième hauteur de butée (z22),
la deuxième extension (21) est éloignée du bord adjacent à la partie centrale (10) d'une distance (d) sensiblement égale à la longueur (x11) de la première butée (18) de la première extension (17).

2. Demi-pièce (6) selon la revendication précédente dans laquelle la différence de hauteur de butée sur la première extension (17), soit la valeur (z11-z12), est inférieure à la hauteur de butée (z22) de la deuxième butée (23) de la deuxième extension (21).

3. Demi-pièce (6) selon l'une des revendications précédentes dans laquelle au moins une partie extérieure (15,16) comprend un prolongement selon l'axe (X) comportant une ouverture (27,28).

4. Demi-pièce (6) selon l'une des revendications précédentes dans laquelle les moyens de maintien du tube (2,3) comprennent une forme arrondie ou forme en V.

5. Demi-pièce (6) selon l'une des revendications précédentes dans laquelle les moyens de maintien du tube (2,3) comprennent des rainures (12) dans le sens longitudinal (Y) du tube (2,3).

6. Demi-pièce (6) selon l'une des revendications précédentes dans laquelle la première hauteur de butée (z11) de la première extension (17) est supérieure à la première hauteur de butée (z21) de la deuxième extension (21).

7. Demi-pièce (6) selon l'une des revendications précédentes dans laquelle la première butée de la deuxième extension (21) comprend un marqueur de position.

8. Demi-pièce selon (6) l'une des revendications précédentes dans laquelle la partie centrale comprend un allongement (31) dans le sens Z.

9. Demi-pièce (6) selon l'une des revendications précédentes obtenue par un procédé d'extrusion.

10. Dispositif d'attache (5) d'un tube (2,3) comprenant deux demi-pièces (6) selon l'une des revendications 1 à 9 et des moyens d'attache des deux demi-pièces (6) entre elles.

11. Dispositif d'attache (5) selon la revendication précédente dans lequel une demi-pièce (6) est dans le plan (X,Y,Z) et l'autre demi-pièce (6) a subi une rotation selon l'axe (X).

12. Dispositif d'attache (5) selon la revendication 10 dans lequel une demi-pièce (6) est dans le plan (X,Y,Z) et l'autre demi-pièce (6) a subi une rotation selon l'axe (Y).

13. Système d'attache (S) comprenant un dispositif d'attache (5) selon la revendication 11 et un dispositif d'attache (5) selon la revendication 12 et des moyens de manœuvre par pivot des deux dispositifs d'attache (5) entre eux.

14. Système d'attache (S) selon la revendication précédente dans lequel les moyens de manœuvre par pivot comprennent un axe (7) traversant les quatre demi-pièces (6).

## Patentansprüche

1. Halbteil (6) für eine Befestigungsvorrichtung (5) eines Rohrs (2,3) einer Auslegerstruktur einer Oberleitung (1), umfassend:
- einen Mittelteil (10), der in der Richtung (X) senkrecht zur Längsrichtung (Y) des Rohrs (2,3) langgestreckt ist und zumindest teilweise Haltemittel für das Rohr (2,3) umfasst, und
- zwei Außenteile (15,16), die sich in der Richtung (X) auf beiden Seiten des Mittelteils (10) erstrecken, wobei ein erstes Außenteil (15) eine erste Verlängerung (17) umfasst, die sich in der Richtung (Z) von dem an das Mittelteil (10) angrenzenden Rand senkrecht zur Ebene (X,Y) erstreckt und zwei Anschläge (18,19) aufweist, die zwei Höhen (z11,z12) definieren, wobei ein erster Anschlag (18) eine erste Anschlaglänge (x11) und eine erste Anschlaghöhe (z11) umfasst und ein zweiter Anschlag (19) eine zweite Anschlaghöhe (z12) umfasst, wobei die erste Anschlaghöhe (z11) größer als die zweite Anschlaghöhe (z12) ist, wobei ein zweites Außenteil (16) eine zweite Verlängerung (21) in der Richtung (Z) senkrecht zur Ebene (X,Y) umfasst, die zwei Anschläge (22,23) aufweist, die zwei Höhen (z21, z22) definieren, einen ersten Anschlag (22), der eine erste Anschlaghöhe (z21) umfasst, und einen zweiten Anschlag (23), der eine zweite Anschlaghöhe (z22) und eine zweite Anschlaglänge (x22) umfasst, wobei die erste Anschlaghöhe (z21) größer als die zweite Anschlaghöhe (z22) ist,
die zweite Verlängerung (21) von dem an den Mittelteil (10) angrenzenden Rand um einen Abstand (d) beabstandet ist, der im Wesentlichen gleich der Länge (x11) des ersten Anschlags (18) der ersten Verlängerung (17) ist.

2. Halbteil (6) nach dem vorstehenden Anspruch, wobei die Differenz der Anschlaghöhe an der ersten Verlängerung (17), d. h. der Wert (z11-z12), kleiner ist als die Anschlaghöhe (z22) des zweiten Anschlags (23) der zweiten Verlängerung (21).

3. Halbteil (6) nach einem der vorstehenden Ansprüche, wobei mindestens ein Außenteil (15,16) eine Verlängerung entlang der Achse (X) mit einer Öffnung (27,28) umfasst.

4. Halbteil (6) nach einem der vorstehenden Ansprüche, wobei die Haltemittel für das Rohr (2,3) eine abgerundete Form oder eine V-Form umfassen.

5. Halbteil (6) nach einem der vorstehenden Ansprüche, wobei die Haltemittel für das Rohr (2,3) Nuten (12) in der Längsrichtung (Y) des Rohrs (2,3) umfassen.

6. Halbteil (6) nach einem der vorstehenden Ansprüche, wobei die erste Anschlaghöhe (z11) der ersten Verlängerung (17) größer ist als die erste Anschlaghöhe (z21) der zweiten Verlängerung (21).

7. Halbteil (6) nach einem der vorstehenden Ansprüche, wobei der erste Anschlag der zweiten Verlängerung (21) eine Positionsmarkierung umfasst.

8. Halbteil nach (6) einem der vorstehenden Ansprüche, wobei das Mittelteil einen Fortsatz (31) in der Z-Richtung aufweist.

9. Halbteil (6) nach einem der vorstehenden Ansprüche, das durch ein Extrusionsverfahren erhalten wurde.

10. Befestigungsvorrichtung (5) eines Rohrs (2,3), umfassend zwei Halbteile (6) nach einem der Ansprüche 1 bis 9 und Mittel zur Befestigung der beiden Halbteile (6) aneinander.

11. Befestigungsvorrichtung (5) nach dem vorstehenden Anspruch, wobei ein Halbteil (6) in der Ebene (X,Y,Z) liegt und das andere Halbteil (6) um die Achse (X) gedreht ist.

12. Befestigungsvorrichtung (5) nach Anspruch 10, wobei ein Halbteil (6) in der Ebene (X,Y,Z) liegt und das andere Halbteil (6) um die Achse (Y) gedreht ist.

13. Befestigungssystem (S), umfassend eine Befestigungsvorrichtung (5) nach Anspruch 11 und eine Befestigungsvorrichtung (5) nach Anspruch 12 und Mittel zur Schwenkbetätigung der beiden Befestigungsvorrichtungen (5) zueinander.

14. Befestigungssystem (S) nach dem vorstehenden Anspruch, wobei die Schwenkbetätigungsmittel eine Achse (7) umfassen, die die vier Halbteile (6) durchsetzt.

## Claims

1. A half-piece (6) for an attachment device (5) for a tube (2,3) of a catenary support structure (1) comprising:
- a central part (10) elongate in the direction (X) perpendicular to the longitudinal direction (Y) of the tube (2,3) and at least partially comprising means for holding the tube (2,3), and
- two outer parts (15,16) extending in the direction (X) on either side of the central part (10), a first outer part (15) comprising a first extension (17) extending in the direction (Z) from the edge adjacent to the central part (10) perpendicular to the plane (X,Y) comprising two stops (18,19) defining two heights (z11,z12), a first stop (18) comprising a first stop length (x11) and a first stop height (z11) and a second stop (19) comprising a second stop height (z12), the first stop height (z11) being greater than the second stop height (z12), a second outer part (16) comprising a second extension (21) in the direction (Z) perpendicular to the plane (X,Y) comprising two stops (22,23) defining two heights (z21,z22), a first stop (22) comprising a first stop height (z21) and a second stop (23) comprising a second stop height (z22) and a second stop length (x22), the first stop height (z21) being greater than the second stop height (z22),
the second extension (21) is distanced from the edge adjacent to the central part (10) by a distance (d) substantially equal to the length (x11) of the first stop (18) of the first extension (17).

2. The half-piece (6) according to the preceding claim, wherein the difference in stop height on the first extension (17), that is the value (z11-z12), is less than the stop height (z22) of the second stop (23) of the second extension (21).

3. The half-piece (6) according to either of the preceding claims, wherein at least one outer part (15,16) comprises an extension along the axis (X) having an opening (27,28).

4. The half-piece (6) according to any of the preceding claims, wherein the means for holding the tube (2,3) comprise a rounded shape or V-shape.

5. The half-piece (6) according to any of the preceding claims, wherein the means for holding the tube (2,3) comprise grooves (12) in the longitudinal direction (Y) of the tube (2,3).

6. The half-piece (6) according to any of the preceding claims, wherein the first stop height (z11) of the first extension (17) is greater than the first stop height (z21) of the second extension (21).

7. The half-piece (6) according to any of the preceding claims, wherein the first stop of the second extension (21) comprises a position marker.

8. The half-piece (6) according to any of the preceding claims, wherein the central part comprises an elongation (31) in the Z direction.

9. The half-piece (6) according to any of the preceding claims obtained by an extrusion method.

10. An attachment device (5) for a tube (2,3) comprising two half-pieces (6) according to any of claims 1 to 9 and means for attaching the two half-pieces (6) together.

11. The attachment device (5) according to the preceding claim, wherein one half-piece (6) is in the plane (X,Y,Z) and the other half-piece (6) has been rotated along the axis (X).

12. The attachment device (5) according to claim 10, wherein one half-piece (6) is in the plane (X,Y,Z) and the other half-piece (6) has been rotated along the axis (Y).

13. An attachment system (S) comprising an attachment device (5) according to claim 11 and an attachment device (5) according to claim 12 and means for pivotably maneuvering the two attachment devices (5) together.

14. The attachment system (S) according to the preceding claim, wherein the means for pivotably maneuvering comprise a pin (7) passing through the four half-pieces (6).
